# EUROPEAN PATENT APPLICATION

(11) **EP 1 806 666 A2**
(43) Date of publication of application: **11.07.2007**
(21) Application number: 06026358.9
(22) Date of filing: 19.12.2006
(51) Int. Cl.: G06F 17/30, H04N 5/445

(54) **Method for presenting set of graphic images on television system and television system for presenting set of graphic images**

(30) Priority: 04.01.2006 US 325182
(71) Applicant: MITSUBISHI ELECTRIC CORPORATION, Chiyoda-ku Tokyo 100-8310 (JP)
(72) Inventor: Shipman, Samuel E., Acton, Massachusetts 01720 (US); Divakaran, Ajay, Woburn, Massachusetts 01801 (US)
(74) Representative: Pfenning, Meinig & Partner GbR

(57) **Abstract**

A method and system for presenting a set of graphic images on a television system is presented. A sequence of frames of a video is received. The frames are decoded and scaled to reduced size frames, which are sampled temporally and periodically to provide selected frames. The selected frames are stored in a circular buffer and converted to graphic images. The graphic images are periodically composited and rendered as an output graphic image using a graphic interface.

## Description

### Field of the Invention

The invention relates generally to image presentation, and more particularly to image presentation for rapid scanning.

### Background of the Invention

In the physical world, we can get the overall gist of a book by rapidly riffling through its pages. This task is even easier when the book is illustrated. The same technique can be used to locate a known target within the book, i.e., a page that a reader has seen before and is now trying to locate again. Since getting the gist of an offering and searching for a known target are tasks commonly encountered in electronic information applications as well, there is a need for techniques in the digital world similar to those of riffling the pages of a book.

The standard practice in electronic media is to present information statically on "pages." Controls are provided to allow users to change to a different page, but not to flip rapidly forwards or backwards through a set of "pages." The closest activities that resemble the riffling of book pages is fast-forwarding or rewinding through a video or "surfing" through channels of television signals. However, these controls do not allow users to control the speed and direction of the presentation to maximum advantage and the methods are not generally available as a method for overviewing or targeting information other than video.

For years psychologists have studied human visual perception through a type of presentation known as rapid serial visual presentation (RSVP). It is known that humans can process briefly presented images extremely quickly. There is a long history of experiments investigating cognitive processes involved in reading and visual perception where images or text are flashed quickly. A recent edited volume of papers provides a summary and historical overview of this work, see Coltheart (Ed.), "Fleeting Memories: Cognition of Brief Visual Stimuli," MIT Press, 1999.

It is believed that people process visual information in a series of brief discrete fixations of the eyes, typically in the range of 150 to 300 milliseconds. Between these fixations, saccade eye movements are rapid. Perception and comprehension of details are at the center of discrete fixations, whereas fuzzy perception at the periphery of vision is used in a process that determines the target of the next saccade.

In general, it is believed that visual perception progresses in stages that can lead to long-term retention in memory. However, it is possible for visual information to be seen and then quickly forgotten. Subsequent stages of cognitive processing leading to memory retention require resources that can interfere with visual perception and vice versa.

Of the prior art RSVP methods used in human-computer interfaces, the most basic uses a temporal sequence of single images that roughly corresponds to conditions studied in the psychology literature. Each successive image displaces a previously displayed image. That method of presentation has been referred to as slide-show or keyhole mode, see Tse et al., "Dynamic Key Frame Presentation Techniques for Augmenting Video Browsing," Proceedings of the Working Conference on Advanced Visual Interfaces (AVI 1998), pp. 185-194, 1998; and Spence et al., "Rapid, Serial and Visual: A Presentation Technique with Potential," Information Visualization, vol. 1, pp. 13-19, 2002.

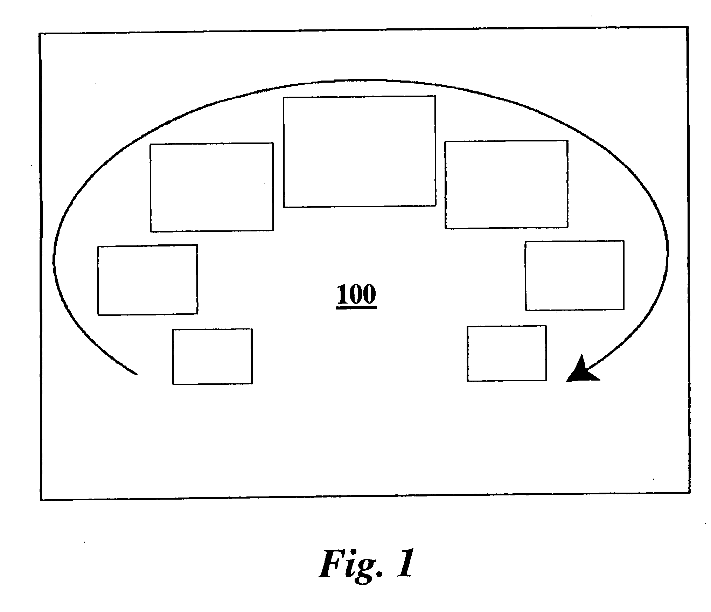

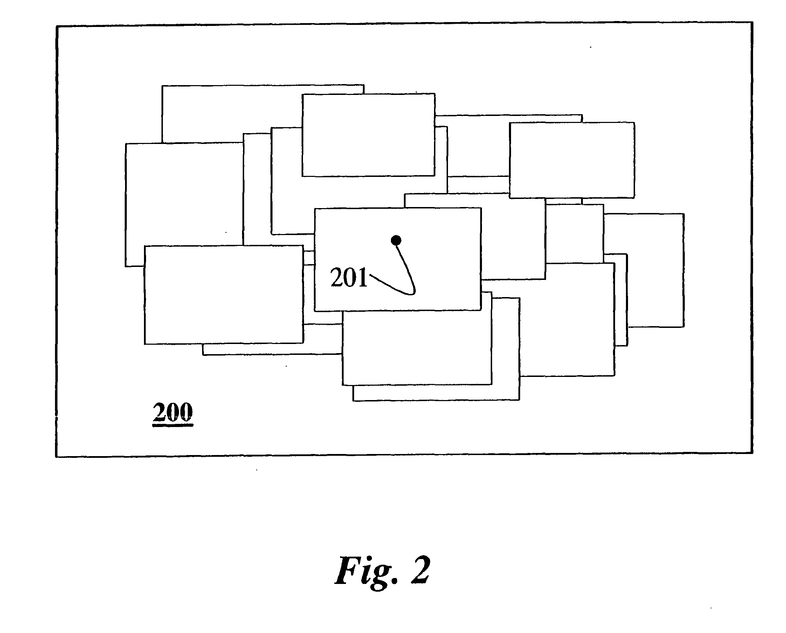

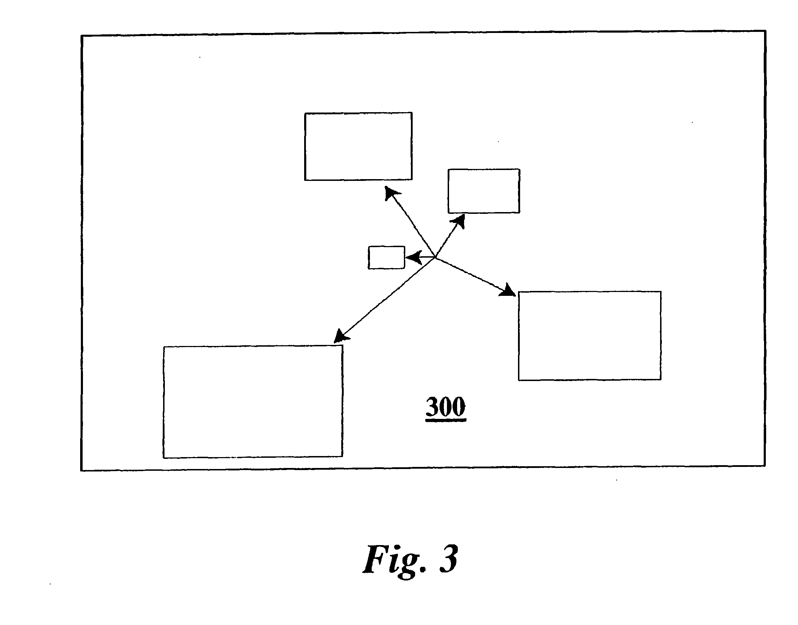

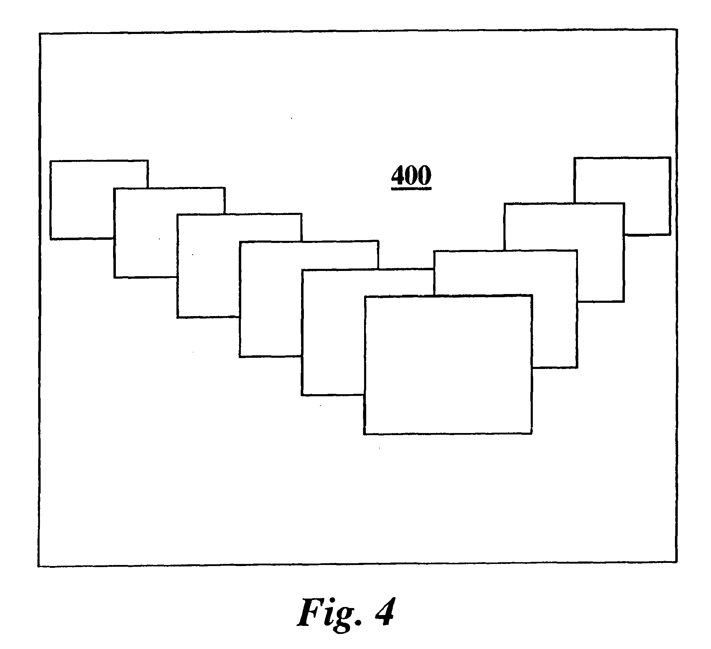

Figures 1-4 show other variations including carousel mode 100, see Figure 1, dynamic collage mode 200, see Figure 2, floating mode 300, see Figure 3, and shelf mode 400, see Figure 4. Those modes all use additional movement or displacement of the images.

To date, there are only preliminary findings regarding the efficacy of RSVP methods in human-computer interfaces. It seems that the experiments thus far have simply confirmed that humans can extract visual information presented rapidly in slide-show mode. Tse et al. investigated fixed-rate slide-show methods for video browsing. Users were able to extract the gist of a movie, even when images were presented extremely rapidly, e.g., eight frames per second.

However, it has been hypothesized that the other RSVP methods might provide advantages by allowing the user more flexibility and control over their attention. The user could reject irrelevant images sooner, and focus longer on relevant images. However, preliminary experiments with more complex 2D spatial/temporal layouts, such as the carousel mode 100 and the dynamic collage mode 200 have not been able to show any advantage over slide-show mode. For example a pilot experiment comparing dynamic collage mode with slide-show mode is described in Wittenburg et al., "Browsing Through Rapid-Fire Imaging: Requirements and Industry Initiatives," Proceedings of Electronic Imaging 2000: Internet Imaging, pp. 48-56, 2000. They describe an experiment involving tasks in Internet shopping where users had full control over the speed and direction of presentation. They compared the slide-show RSVP mode with the dynamic collage mode, as well as with a more conventional web page presentation method. In the dynamic collage mode, the images are placed successively and semi-randomly around a center point 201 until the images are occluded by subsequent images or are cleared from the display, see Figure 2. Unlike the carousel mode 100, no image movement or scale changes are involved. Images of products were shown in three modes, slide-show, dynamic collage, and web page. Users were asked to perform two tasks. The first was a gist extraction task. The second task was to determine the presence or absence of a target product. The relevant findings were that users preferred the slide-show mode over the dynamic collage and the web page mode, although no performance differences were observed.

The prior art methods other than slide-show mode require too much cognitive processing by the user since the user must attend simultaneously to many rapidly changing images and/or shift gaze to images at new 2D locations. Some of these methods require tracking in 2D, e.g., the carousel mode 100, and others require shifting gaze to focus to different locations, e.g., the dynamic collage mode 200. It should not be surprising that variants in which images move or in which images pop up at new locations require additional cognitive overhead.

De Bruijn et al. describe eye-tracking experiments connected with RSVP interface methods, see De Bruijn et al., "Patterns of Eye Gaze During Rapid Serial Visual Presentation," Proceedings of the Working Conference on Advanced Visual Interfaces (AVI 2002), pp. 209-217, 2002. They compare a number of RSVP alternatives that require tracking, e.g., carousel, or focusing to different positions, e.g., dynamic collage. They make a number of observations regarding the patterns of eye gaze for the RSVP variant modes tested. They observed that different eye-tracking strategies were used for the shelf mode 400. One user seemed to focus only on the area in which new images appeared before moving off to background portions of the presentation. Another user seemed to track the images as they were moving. We hypothesize from these observations that new methods are needed to support users changing the focus of attention in order to adjust to their task (e.g., searching for a target image vs. extracting the gist of a sequence).

Therefore, it is desired to exploit human visual and cognitive capabilities to improve the presentation and browsing of electronic multimedia content.

### Summary of the Invention

The invention provides a system and method for interactively presenting images in a manner suitable for rapid scanning. The invention takes advantage of the natural human cognitive ability to track objects moving towards or away from the viewer in three-dimensional space.

The invention integrates a focus area that enables the processing of rapidly presented visual information without excessive eye movement. A refinement of the layout applies to images that are temporally related or grouped logically. A further innovation allows for relative temporal sequencing in order to progress through targeted images in the overall collection.

The invention can be applied to a large number of display systems where choices must be made from a collection of images that can be represented visually. Examples include browsing and searching of recorded videos, selection of television programs, people finding, and selecting items from catalogs in virtual or virtually augmented retail environments.

### Brief Description of the Drawings

Figure 1 shows images displayed according to a prior art carousel display mode;
Figure 2 shows images displayed according to a prior art dynamic collage mode;
Figure 3 shows images displayed according to a prior art floating mode;
Figure 4 shows images displayed according to a prior art shelf mode;
Figures 5 shows images displayed along a linear three-dimensional trajectory according to the invention;
Figures 6 shows images displayed along a curved three-dimensional trajectory according to the invention;
Figures 7 shows images displayed along a serpentine three-dimensional trajectory according to the invention;
Figure 8 shows groups of images separated by transition images;
Figure 9 shows image control according to the invention;
Figures 10A-C show a collector frame according to the invention;
Figure 11 shows semi-automatic presentation of images with target frames according to the invention;
Figure 12 is a block diagram of a user input device;
Figure 13 is a flow diagram of a presentation method according to the invention;
Figure 14 is a block diagram of an active set of images according to the invention;
Figure 15 is a block diagram of a television system for browsing videos using a temporal-context-based video browsing interface according to an embodiment of the invention;
Figure 16 is a block diagram of a method for browsing on the television system according to an embodiment of the invention; and
Figure 17 is a flow diagram of the system and method of Figures 15 and 16.

### Detailed Description of the Preferred Embodiment

### Introduction

One embodiment of our invention provides a method and system for presenting and browsing images that takes better advantage of the human visual system, specifically depth and peripheral perception. The method is integrated with the more familiar slide-show mode of rapid serial visual presentation (RSVP), and enhanced with a number of techniques for spatial and temporal layouts. We include a common set of controls for linear forward and backward traversal at adjustable rates of speed.

### System Structure and Method

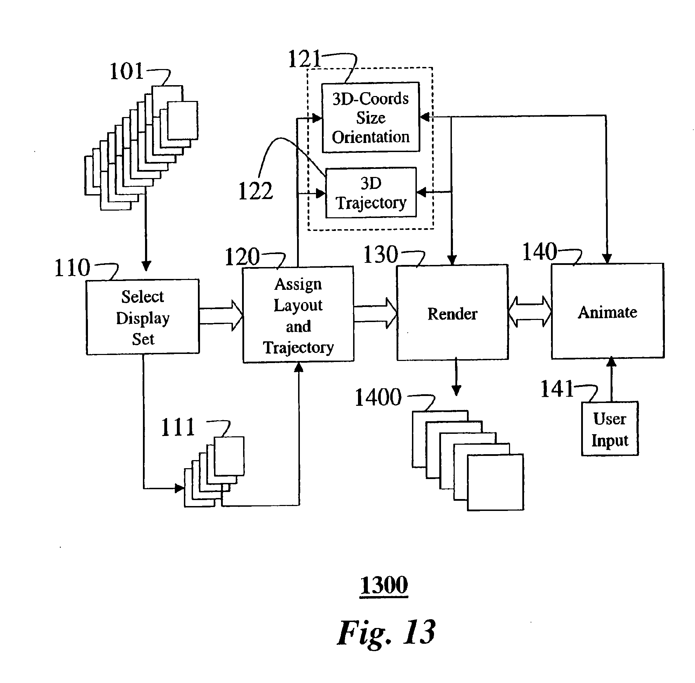

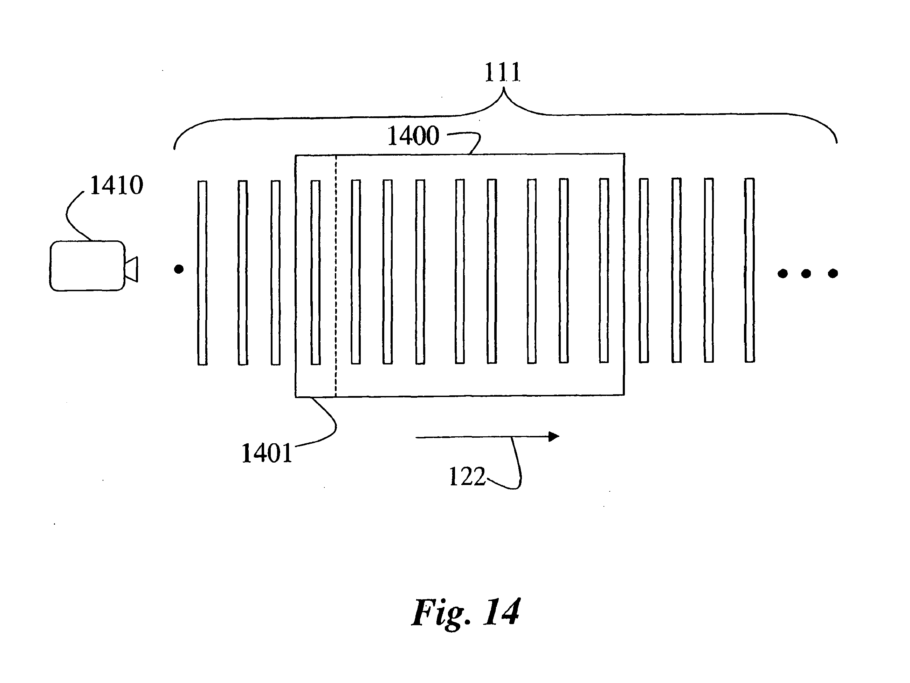

As shown in Figures 13 and 14, a method 1300 begins with a set of images 101. The set of images can be stored in a memory of a computer system. The images can be still images, pages of text documents, product pictures, or a sequence of images in a video, e.g., a MPEG video. Step 110 selects a set of display images 111. The selection can be a summary, a periodic selection, e.g., every tenth frame, or some other selection process.

Step 120 assigns a layout 121 to the set of display images. For each image, the layout includes 3D coordinates, a size, and an orientation. Step 120 also assigns a 3D trajectory 122 to a virtual camera 1410. Step 130 renders an active set of images 1400 depending on the layout 121 and the trajectory 122. The active set 1400 includes a collector image 1401, and the remaining images are dynamic. The line 122 shows the trajectory of the camera 1410. The collector image is displayed statically in the collector frame, described below, while the rest of the images in the active set move toward the collector frame. The trajectory and active set essentially provide a moving window through the display set 111. As described below, the window can move in different directions, forwards or backwards, and at different rates.

The animation step 140 alters the layout and trajectory, perhaps using user input 141. The rendering 130 and animation 140 steps are then repeated until all display images are rendered, or the user terminates the method.

### Selecting the Display Images

Given the set of images 101, e.g., the frames of a video, pictures of products or faces, pages of book, etc., the set of display images 111 is selected 110. This set can include any number of the original set's images up to and including the entire set. The process used to select the display set 111 can be any number of known techniques, including using key or encoded I-frames of a MPEG video, a video summary, or periodic or random selection. The images in the display set can be a sequence of related or unrelated images.

### Assigning the Layout to the Display Images

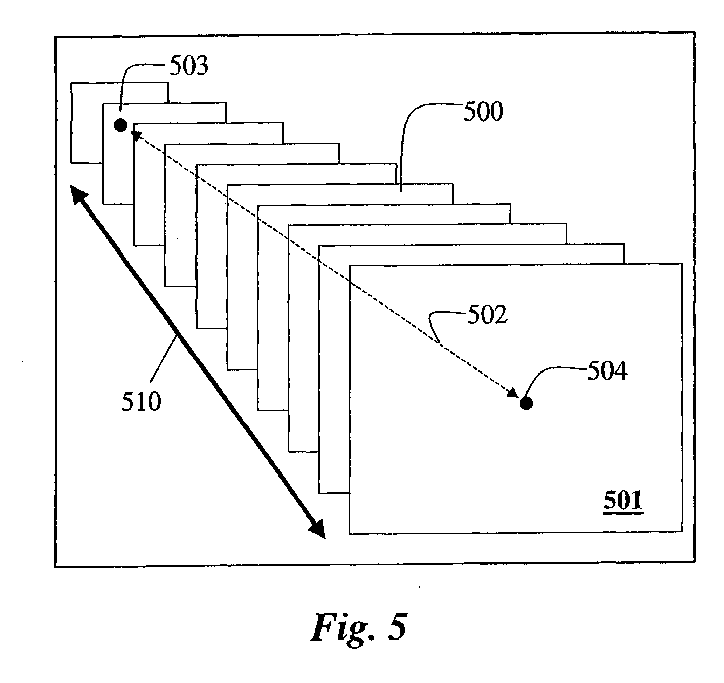

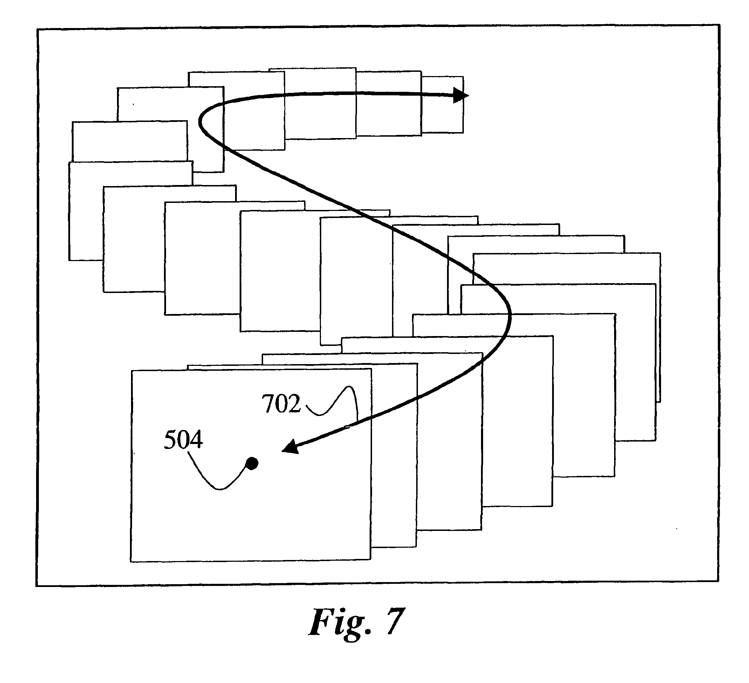

The method 1300 assigns 120 3D coordinates, size, and orientation to each image in the display set 111. The layout can be linear, circular, spiral, serpentine, or follow some other function. As shown in Figures 5-7, the layout of images 500 is arranged along a three-dimensional trajectory formed by a line from center point 503 to center point 504 in the display images.

### Assigning the Trajectory to the Virtual Camera

The trajectory of the virtual camera 1410 can be linear 510, curved 602, or serpentine 702.

### Rendering the Active Images

The "depth" of each image along the trajectory 122 is indicated by its size, with smaller images being farther away from the viewer. The nearest image is the one in the image plane of the display device or the viewing "screen."

### Animating the Display Images

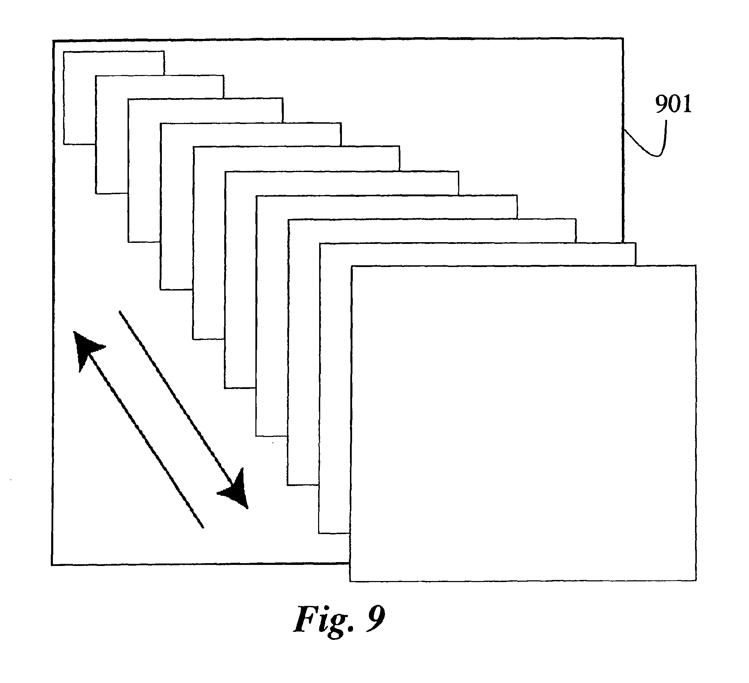

As shown in Figure 9, the user controls the traversal of the camera 1410 along the trajectory 122. Traversal occurs in either direction at variable speeds. As the camera moves, the images appear to move closer, or further away, depending on the direction along the trajectory 122.

As shown in Figure 5-7, the visual effect of the animation is to advance 502 the sequence of images 500 towards or away from a focal point 504. The advancement is temporal with farther images, in a depth dimension, arriving at the focal point 504 later than nearer images, when moving forward through the sequence.

The presentation of images is analogous to the appearance of signs along a highway. In this analogy, the user can control both the speed and the direction (forward or backward) of a car. Looking out the windshield 901, the signs appear to move past at regular temporal and spatial intervals, appearing initially from far away and then moving closer. If the user is moving in reverse, the signs will appear in view from over the shoulder and then regress into the distance.

### Collector Frame

In the basic mode of operation of our invention as described above, images appear to get closer and closer to the user, until they eventually move past the image plane and disappear. This is the standard metaphor of what a driver would see looking straight ahead in a car, as the car passes signs along the roadway.

We provide a variant on the basic display mode that has the advantage of maintaining continuity across related images, e.g., key frames within the same scene of a video. We also provide the static focal point 501 at the near end of the trajectory. Thus, the user does not have to shift gaze when displaying a rapidly changing sequence.

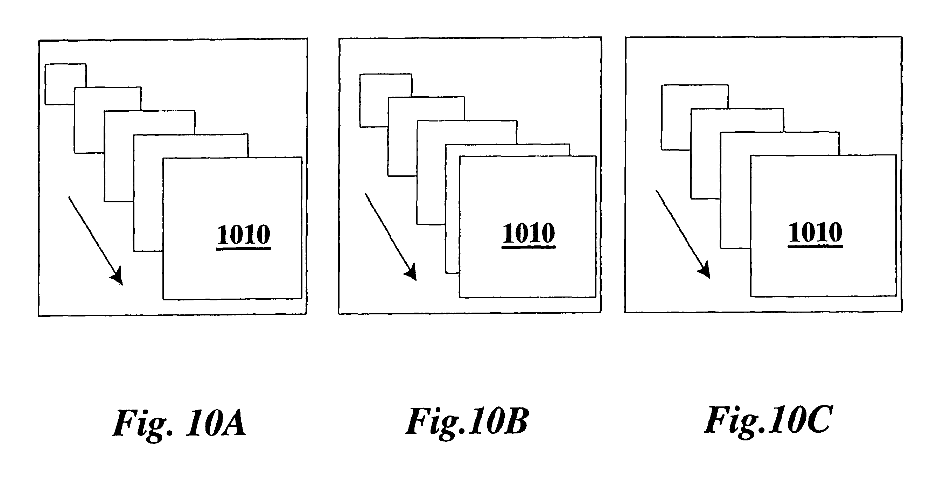

As shown in Figures 10A-C, we use a collector frame 1010 that is at a fixed depth position along the trajectory. As the visual images move closer, they eventually approach the position of the collector frame 1010, which is at the front of the view. After an image reaches the plane of the collector frame, instead of moving past the frame, it replaces the last image that was formerly displayed. In other words the first image 1401 in the active set is held statically in the collector frame, while the other images in the set appear to move towards the collector frame. The other images never occlude the image in the collector frame. From a visual standpoint, the collector frame acts as an area of visual focus whose contents is replaced at a rate much slower than the images advance in the sequence, e.g., the collector frame is replaced once a second.

The collector frame is analogous to the primary viewing area of a conventional video player. Thus, our method combines the advantages of fast forward and reverse of a conventional video players with a distance technique that allows the user to look ahead or behind the focal point in the sequence of images.

Our invention also takes advantage of the user's peripheral vision. While the user focuses on the collector frame 1010, the sequence of images advances from the rear in the user's peripheral vision. Thus, the user can anticipate peripheral high-level information, such as scene changes or the semantic groupings of image content, while still focusing at the foreground in the collector frame.

### Semantic Spacing and Grouping

In the basic case, the images are spaced evenly as a single group along the 3D trajectory. However, the images can be unevenly spaced in multiple groups. Such spacing can represent the images semantically in a temporal sense, as logically ordered scenes or chapters, or as categories of products or services ordered according to cost. This all depends on the layout.

### Transition Images

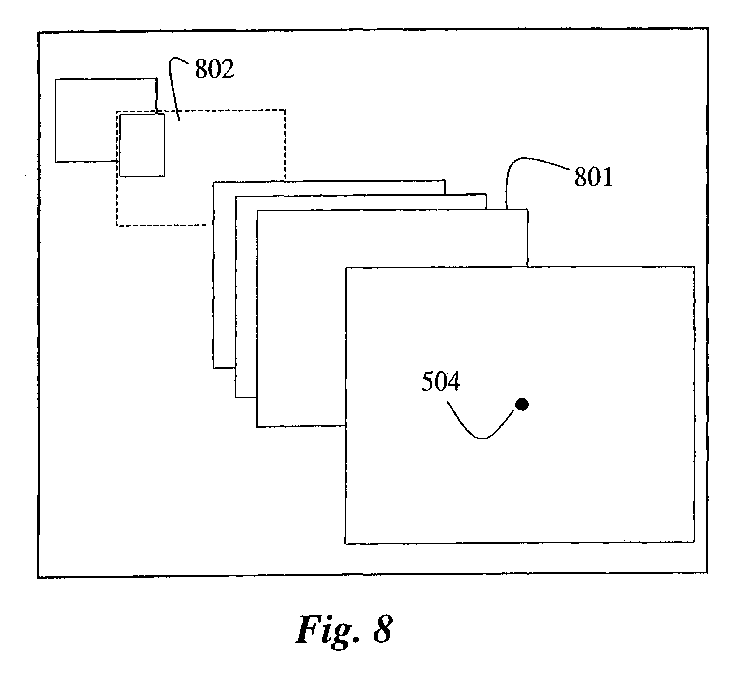

To allow for semantic spacing and grouping as shown in Figure 8, we insert a logical transition image 801 between groups in the sequence. The transition image can represent any form of visual transition from one group in the sequence to the next. The transition image can simply be vacant positions in the sequence, i.e., a transparent image 802.

The use of groups and transition frames reflects any semantically coherent relationship among content in the images that can be mapped onto some one-dimensional linear or nonlinear scale, for example, the content's objects' temporal placement.

### Stopping Traversal of the Sequence of Images

From the psychology literature, it is known that cognitive resources are used for recognition and subsequent reaction to an initial low-level visual processing. This leads to a common problem of "overshooting" when using prior art RSVP modes. This is all too common when searching a video for a particular desired scene or image.

When the RSVP sequence is displayed at a rapid speed, the cognitive overhead required to process and respond to rapidly displayed images inevitably leads to the problem that later images will supersede a desired image. Then, the user may have to back up to retrieve the desired image, perhaps again, overshooting the desired image. Time is wasted while the image sequence oscillates.

Therefore, we provide novel techniques to stop rapid traversal of the sequence along the trajectory. Our method involves a formula for "backing up" after a stop event so that the probability of landing on the desired image is increased.

We determine the desired image based on an estimate of the time required to recognize an image, i.e., about 150 milliseconds, and an estimate of the time required to actuate the motor movement of a control action such as releasing a switch or moving a mouse off of a control icon, i.e., about 100 milliseconds. Therefore, when the stop event is signaled, the desired image is the image that was displayed at the focal point 501 about 250 milliseconds before the stop event was signaled. For example, at 30 frames per second, the eighth previous frame would be displayed.

### Targeted Traversal

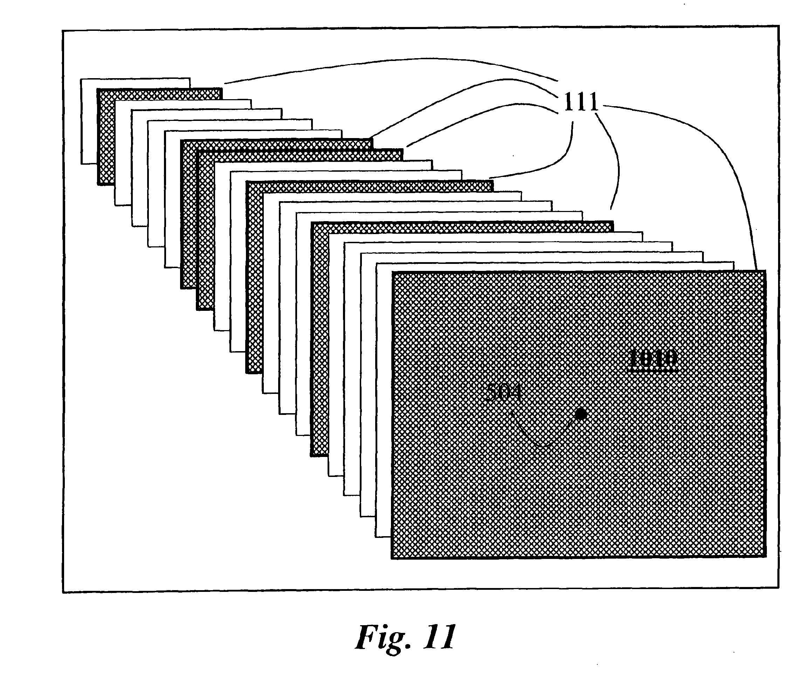

As shown in Figure 11, our invention also enables semi-automatic traversal of a sequence given a set of target frames 111. First, a query or menu operation is used to select 110 content from the entire set of available images 101, that is, the sequence of images 111 that are to be displayed. For example, if the images represent video content available on various television channels, then the user can select just sports channels. Alternatively, the images can be acquired of a scene by a surveillance system. Then, the user can select images for a specific time period, or a selected level of motion, or a recognized person.

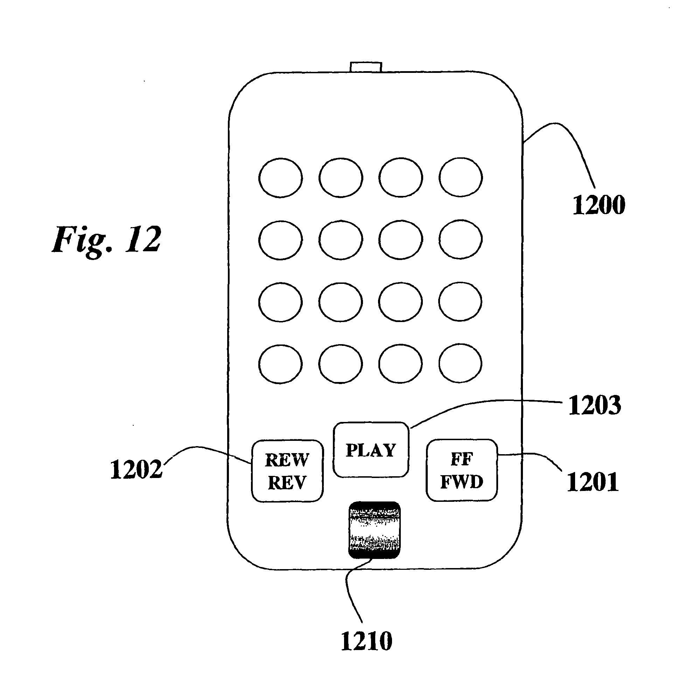

Having selected the set of target frames 111, the user manipulates the direction and speed controls in the described way, moving forward or backwards, faster or slower using the controller 1200 of Figure 12. However, the rate of traversal also depends on distances from targeted frames so that transitions from one target frame the next takes a constant time. Here, the distances are measured according to the 3D coordinates. This has the perceived effect that the speed of passing images, as well as the frame rate in the collector frame 1010, varies according to how far away images are from the nearest target frame.

For example, traversal between far apart target frames take the same amount of time as traversal between closely spaced target frames. Also, the target frames remain longer in the collector frame than other images. During targeted traversal, the user controls the global frame rate at which the sequence is traversed. All other rates, from one targeted frame to the next, and the replacement rate of the collector frame, are relative to the user controlled global frame rate.

### Alternative Embodiments

The invention can be used in a variety of display applications wherever some sort of visual scanning or searching is required.

### Channel surfing

In this application, the channel images to be browsed are representative of television programs. A tuner (channel selector) that cycles through all received programs broadcasts can extract the channel images. One image is extracted from each program during one cycle through all the programs. Alternatively, the broadcaster can provide representative channel images.

As shown in Figure 12, a control device 1200 has a switch 1210 for speed and direction control. In the preferred embodiment, the switch is a rocker switch. The rocker switch allows for continuous control of speed over a certain range in forward and backward directions. Alternatively, the control device can include a fast-forward key 1201, a reverse/rewind key 1202, and a play key 1203.

As the user presses the rocker switch, the current program is interrupted, and the system enters channel surfing mode. The user then traverses through the channel images, either forward or backward, at controllable rates of speed. When the user releases the rocker switch, the system displays the program corresponding to the channel image in the collector frame. This embodiment can be extended to time-shifted video programming. A query module is used to select a set of candidate programs that make up a browsable sequence.

### Video Skimming

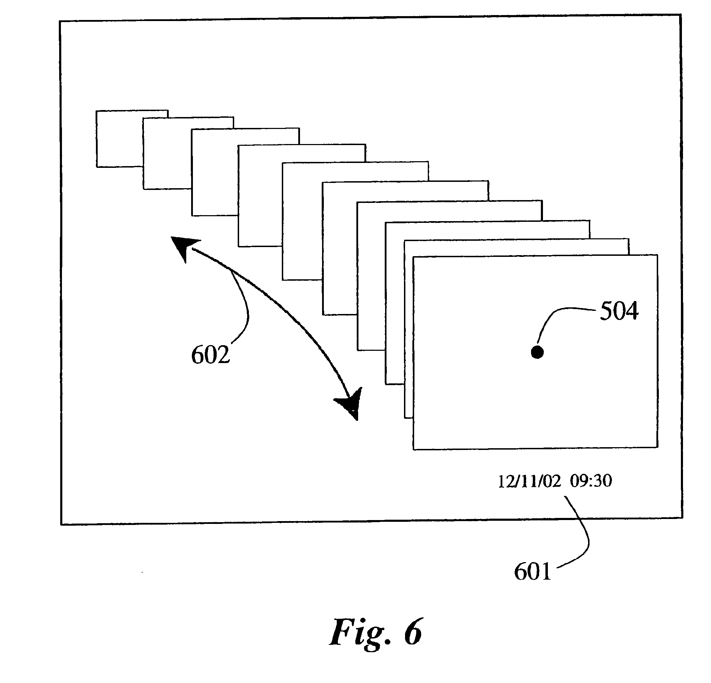

In this embodiment, our method is used to browse, skim, or search videos. A video summarization method determines the key frames to be included in a browsable sequence. The summarization method can use well-known shot detection or scene analysis techniques. The position, in date/time 601, for each key frame in the sequence is indicated in the data associated with the key frames, and is displayed below the collector frame as shown in Figure 6.

### Product Browsing

In this embodiment, the images are of products. The user selects specific products to be browsed or skimmed. The product images can be grouped by price, size, color, manufacturer or other attributes.

### People Finding

In this embodiment, the images are of people. The acquisition of such content can be done by directory services, government agencies, or surveillance videos. The sequence of face images could be ordered by time, location, or similarity.

### Temporal-Context-Based Video Browsing Interface for PVR-Enabled Television Systems

The embodiments above describe a method for browsing stored digital videos in fast-forward (FF) and rewind (REW) modes. That method provides temporal context by displaying overlapping sequential future and past images. Those embodiments use a conventional television and a computer system for processing and displaying the stored video, see also, Divakaran, A., Forlines, C., Lanning, T., Shipman, S., Wittenburg, K., "Augmenting Fast-forward and Rewind for Personal Digital Video Recorders," IEEE International Conference on Consumer Electronics (ICCE), Digest of Technical Papers, pp. 43-44, January 2005, incorporated herein by reference.

There, partially decoded DC frames are extracted from an MPEG encoded bitstream. The DC frames are then down-sampled to a smaller scale and displayed using a video interface. This requires the ability to read ahead in the MPEG stream with respect to a current position of the stream during fast playback, or the ability to extract, store, and index the DC frames elsewhere on the recording medium and retrieve the DC frames during fast playback. Neither of these requirements is afforded by the television system 1500.

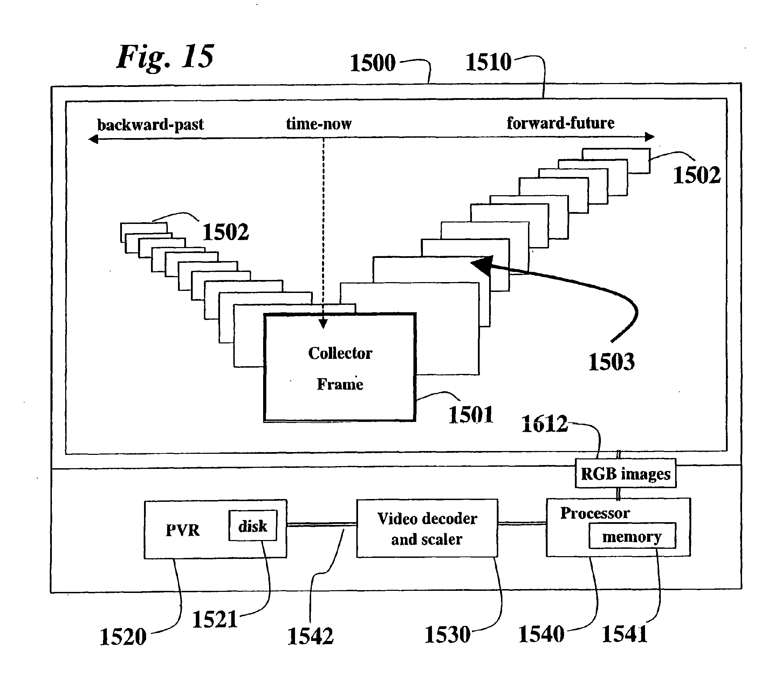

As shown in Figures 15-17, we now describe an embodiment of a temporal-context-based video browsing interface for a personal video recorder (PVR) enabled television system 1500. Although the example implementation is described using a high-definition television (HDTV), it should be understood that other implementations are also possible. For example, a television monitor can be coupled to a set-top box, a DVD player, or other equivalent components that include the requisite functionalities as described herein. The term television system as used herein refers to a class of devices that can display television programs.

The system 1500 includes a television monitor 1510, and a PVR 1520. The PVR includes a hard disk drive 1521 as a storage medium for videos to be played back by the system 1500 as video frames 1531 using a video interface 1701 of the system 1500, during conventional 'non-browsing' operations of the system. A DVD player or set-top box can also be used. The PVR provides the television system with a video stream for normal playback and a 'trick-play' video stream for fast forward and rewind playback.

The system also includes a conventional video decoder and scaler 1530. The system also includes a processor 1540 coupled to the video interface 1701 and a graphic interface 1702 used during browsing according to an embodiment of the invention. The graphic interface is used to display composited graphic RGB images 1612.

The processor includes a memory, a part of which we use as a circular buffer 1541 to store reduced size (scaled) RGB images 1611, as described in greater detail below. The components are connected by a bus 1542. For example, the bus can use the IEEE 1394 protocol, or other equivalent bus protocols.

The challenge is to consume minimal computational resources of the television system so as to avoid disrupting any of the existing functionalities of the system. Furthermore, it is desired to sample stored video frames to generate sampled graphic images. The down-sampled (reduced size) graphic RGB images are composited and rendered using the graphic interface 1702.

### Display Arrangement

The browsing interface of this embodiment is invoked by pressing the FF/FWD or REW/REV keys 1201-1202 on the television's remote control device 1200, see Figure 12. The source of the video is selected to be the hard disk 1521. An example of a composite RGB image 1612 displayed on the television screen 1510 during fast-forward playback is shown in Figure 15.

The reduced size images are composited in an asymmetric 'V' layout 1503 of an output graphic image. Other layouts, as described above are also possible. The images range in size from 1/9 that of the full screen (1/3 scale) at the lower vertex 1501 of the V, to 1/16 that size (1/12 scale) at each end 1502.

New (future) images are first composited at the upper right end of the V, and make their way down the right side of the V to the collector frame at the vertex 1501. The image displayed at the vertex is called the focus image. The focus image is considered the current image. The focus image represents the instant in time at which normal-speed full-screen playback resumes when the viewer presses the play key 1203.

Images to the right of the vertex are of the future with respect to the focus image, and the images to the left are of the past. No other image overlaps the focus image. The appearance is substantially equivalent to watching traditional fast forward video at 1/3 scale.

Although the future images overlap, scene boundaries and camera movement are clearly visible, which helps the viewer identify upcoming points of interest in the video and react accordingly.

The layout is asymmetric because it is more useful to see farther into the future than the past. During fast-reverse playback, the V layout is reversed end-for-end; new frames come in at the upper left end of the V and exit at the lower right.

Our implementation successfully addresses the aforementioned challenges by taking advantage of the system's facilities for high-quality video scaling and frame sampling.

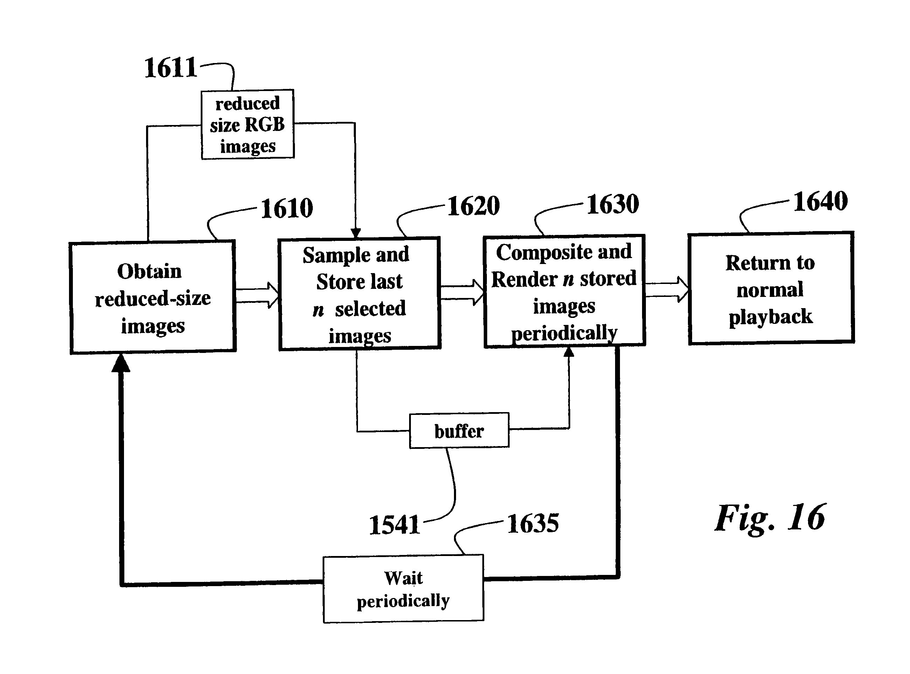

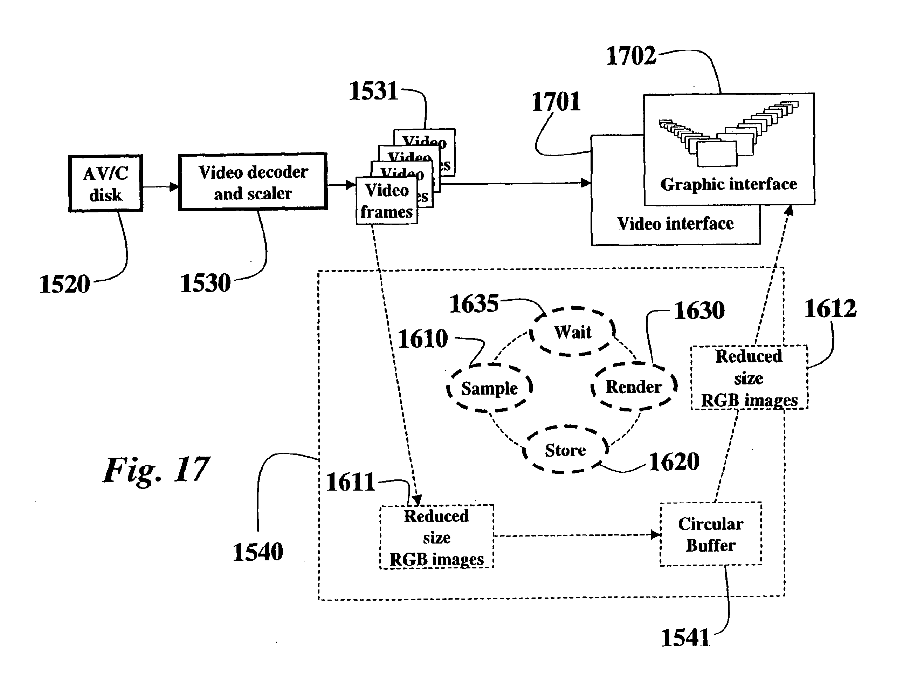

Figures 16 and 17 show the basic steps of a method and system for browsing videos using the television system 1500. The method obtains 1610 periodically sequential samples of reduced-size images 1611 that are in the 'future' with respect to the current image. That is, the sampling is temporal and periodic. For example, every fifth or tenth fame is sampled. By periodically selecting only some of the frames, fast forward and reverse effects are enabled. For example, if only one in ten frames is selected during the sampling, the speed up during playback is by a factor of ten. The sampled frames are stored in the circular buffer 1541.

The buffering of the reduced-size images gives us the ability to present some of the images as 'future' images, and the ability to control the PVR transport to move the playback position backward, before resuming playback. This preserves an illusion for the user that the playback can move forward and backward in time. A conventional PVR and AV/C disk do not have this capability. The invention corrects this problem.

The last *n* of images of a selected video are stored 1620 in the circular buffer 1541, where *n* is the number of images displayed in the V layout. The stored images are composited into the V layout of the output graphic image 1612. The composited output graphic image 1612 is rendered 1630 periodically, at least five times per second, as the V layout display 1503. These steps are repeated 1635 with a small wait period in each cycle. When the viewer presses the play key, the system returns 1640 to normal-speed playback.

For the previously described embodiments, a computer system is used as an interface to the television. There, the sample images are obtained by reading ahead in an encoded MPEG-2 stream. Furthermore, DC-images are extracted from compressed data in the 1-frames. Then, the DC images are scaled down. All operations operate in the video domain. In contrast, the displayed images in this embodiment are in the graphic domain.

One embodiment of the television system 1500 uses IEEE 1394 Audio/Video Control (AV/C) disks 1521 to store videos, see "1394 Trade Association Document 2002001, AV/C Disk Subunit General Specification 1.2, September 13, 2002."

AV/C disks provide a high-level interface for recording and playback of audio and video content. For playback, in normal and fast-forward and rewind modes, the AV/C disk provides video streams only at a real-time rate using IEEE 1394 isochronous transfer protocols. This makes it impossible to read ahead in the normal input video stream 1531 during playback. That is, it is not possible to display 'future' fames.

As shown in Figure 17, it is desired that our implementation have as little impact on the structure, function, and performance of the television system as possible. The additional functionality provided by this embodiment is shown as dashed lines. Buffering the MPEG video stream before decoding to accumulate 'future' video frames would add another complex step during the time critical path for decoding.

Because the television system supports high-quality down-scaling 1530, this embodiment uses that functionality to obtain the reduced-size images 1611 for use as focus (vertex) images, and to use a graphics scaler to reduce the size of the images further for display in either side of the V layout as composited images using the graphic interface 1702. By either side, we mean forward and backward in time with respect to the image in the collector frame.

Hardware and software for sampling the current decoded and scaled-down video image and converting the image from YUV video format to RGB graphic format of the graphic interface is also provided by the television system to support existing features of the television system, e.g., the picture-outside-picture or 'POP' screen format.

Instead of read-ahead or buffering of a MPEG video stream as in the prior art, we buffer the n sampled 1/3 scale images 1611. The n 1/3 scale images are stored in the circular buffer 1541 to render the V layout 1503 using the graphic interface 1702. The V layout display is composited entirely as a *graphic* overlay in RGB format. As an advantage, the graphic overlay does not require synchronization with the decoded video output. That is, the down-sampling process is asynchronous with respect to the decoding/scaling process.

The time required to fill the V layout with composited images is sufficient to buffer a useful number of future images, e.g., ten or more. The initial fill time is short, about two seconds, so the typical viewer should not notice the small time delay. This system can be used both with pre-stored media, or real-time media delivered by a broadcast signal or a cable signal via a set-top box.

Aside from the hardware-supported graphics operations referred to above, all steps for the browsing interface are performed by the processor 1540. A substantial fraction of the processor's capacity is already used in support of decoding and for other conventional functions. To avoid disrupting any existing functionality, the thread of execution for the browsing interface is assigned an appropriate scheduling priority and allowed to free-run and asynchronously, up to a maximum rate enforced by a timer event. The exact update rate and timing are not critical, and in practice a usable update rate, e.g., 7 Hz, is achieved, and jitter is not noticeable.

Because the playback position in the video is a few seconds ahead of the focus output image, the playback position is adjusted to correspond with that of the focus image when the viewer presses the play key to return to normal-speed full-screen playback. Each reduced size image is time-stamped as it is sampled, and the difference between the time-stamps of the focus image and the image at the upper end of the "incoming" side of the V is passed to the AV/C device control function, which uses that value to adjust the playback position before switching to normal-speed playback.

### Effect of the Invention

We successfully adapted our temporal-context-based video browsing interface to a consumer product, implementing it as a feature of a high-definition television equipped with an internal PVR. We were able to leverage the features of the target platform to create an implementation quite different from that of our previous prototype, but better suited to the strengths and weaknesses of the platform. Because the feature requires no additional hardware, it incurs no additional manufacturing cost.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. A method for presenting a set of graphic images on a television system, comprising the steps of:
receiving a sequence of frames of a video;
decoding and scaling the sequence of frames to reduced size frames;
sampling temporally and periodically the reduced size frames to provide selected frames;
storing a previous n of the selected frames in a circular buffer;
converting the n selected frames to n graphic images;
compositing periodically the *n* graphic images stored in the circular buffer to an output graphic image; and
rendering periodically the output graphic image using a graphic interface of the television system.

2. The method of claim 1, in which the sequence of frames is stored in a personal video recorder.

3. The method of claim 1, in which the reduced size frames are composited in an asymmetric V layout.

4. The method of claim 3, in which a right end of the V layout includes future images, a left end of the V layout includes past images, and a vertex of the V layout is a current image.

5. The method of claim 4, in which the right end of the V layout is larger than the left end.

6. The method of claim 1, in which one in ten frames are selected for storing.

7. The method of claim 1, in which the compositing and rendering of the graphic image is at a rate of at least five per second.

8. The method of claim 1, in which the sequence of frames are in a YUV video format, and the graphic images are in a RGB graphic format.

9. The method of claim 1, in which the reduced size frames are about one third of a size of the frames of the video.

10. The method of claim 1, in which the compositing and rendering are asynchronous with respect to the decoding and sampling.

11. The method of claim 10, in which a delay between the compositing and rendering, and the decoding and sampling is about two seconds.

12. The method of claim 4, in which the current image moves forward and backward in time.

13. A television system for presenting a set of graphic images, comprising:
means for providing a sequence of frames of a video;
means for decoding and scaling the sequence of frames to reduced size frames;
means for sampling temporally and periodically the reduced size frames to provide selected frames;
a circular buffer configured to store a previous n of the selected frames;
means for converting the n selected frames to *n* graphic images;
means for compositing periodically the n graphic images stored in the circular buffer to an output graphic image; and
a graphic interface configured to render periodically the output graphic image.

14. The system of claim 13, in which the means for providing is a personal digital recorder.

15. The system of claim 13, in which the means for providing is a set-top box.

16. The system of claim 13, in which the means for providing is a broadcast video signal.

17. The system of claim 13, in which the television system uses high-definition television signals.

18. The system of claim 13, in which the compositing and rendering moves forward and backward in time.
